(19) Europäisches Patentamt
European Patent Office
Office européen des brevets

(11) **EP 3 058 431 B1**

(12) **FASCICULE DE BREVET EUROPEEN**

(45) Date de publication et mention de la délivrance du brevet:
**15.04.2020 Bulletin 2020/16**

(21) Numéro de dépôt: **14789213.7**

(22) Date de dépôt: **16.10.2014**

(51) Int Cl.:
*G05D 1/00* *(2006.01)*    *G01C 21/20* *(2006.01)*
*G01C 23/00* *(2006.01)*    *G01F 1/00* *(2006.01)*
*G08G 5/00* *(2006.01)*    *G05D 1/06* *(2006.01)*
*B64C 39/02* *(2006.01)*

(86) Numéro de dépôt international:
**PCT/EP2014/072229**

(87) Numéro de publication internationale:
**WO 2015/055769 (23.04.2015 Gazette 2015/16)**

(54) **DISPOSITIF ET PROCÉDÉ DE REPÉRAGE DE TERRAIN EN VOL POUR MICRODRONE**

VERFAHREN UND VORRICHTUNG ZUR GELÄNDEIDENTIFIKATION WÄHREND DES FLUGES EINER MIKRODROHNE

METHOD AND DEVICE FOR IN-FLIGHT TERRAIN IDENTIFICATION FOR MICRODRONE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.10.2013 FR 1360211**

(43) Date de publication de la demande:
**24.08.2016 Bulletin 2016/34**

(73) Titulaires:
• **Université d'Aix-Marseille**
**13007 Marseille (FR)**
• **Centre National de la Recherche Scientifique (C.N.R.S.)**
**75016 Paris (FR)**

(72) Inventeurs:
• **RUFFIER, Franck**
**F-13006 Marseille (FR)**
• **EXPERT, Fabien**
**F-94300 Vincennes (FR)**

(74) Mandataire: **Lavoix**
**2, place d'Estienne d'Orves**
**75441 Paris Cedex 09 (FR)**

(56) Documents cités:
**WO-A1-2004/025386**

• **RUFFIER F ET AL: "OCTAVE, a bioinspired visuo-motor control system for the guidance of micro-air-vehicles", PROCEEDINGS OF SPIE, SPIE, US, vol. 5119, no. 1, 19 mai 2003 (2003-05-19) , pages 1-12, XP002582481, ISSN: 0277-786X, DOI: DOI:10.1117/12.498193 [extrait le 2003-07-28]**
• **FABIEN EXPERT ET AL: "Controlling docking, altitude and speed in a circular high-roofed tunnel thanks to the optic flow", INTELLIGENT ROBOTS AND SYSTEMS (IROS), 2012 IEEE/RSJ INTERNATIONAL CONFERENCE ON, IEEE, 7 octobre 2012 (2012-10-07), pages 1125-1132, XP032280513, DOI: 10.1109/IROS.2012.6385946 ISBN: 978-1-4673-1737-5**

**Description**

La présente invention concerne un dispositif de repérage de surface pour le déplacement autonome à distance de cette surface d'un engin mobile, le dispositif de repérage de surface comprenant :

a) une tête de détection de surface définissant un repère lié à la tête de détection avec une origine au centre de la tête de détection, un axe d'avance, un axe de dérive, et un axe d'ascension, la tête de détection comportant au moins un capteur d'une grandeur fonction de la distance du centre de la tête de détection à la surface, chaque capteur couvrant une zone de détection centrée sur une ligne de visée;

b) un système d'orientation de la zone de détection de chaque capteur par rotation de la zone de détection autour de l'axe de dérive; et

c) un contrôleur adapté à recevoir et à traiter les signaux provenant de chaque capteur et à contrôler le système d'orientation de la zone de détection sur la base desdits signaux.

Un tel dispositif est décrit dans l'article « Controlling docking, altitude and speed in a circular high-roofed tunnel thanks to the optic flow » publié le 16 octobre 2012 par Fabien Expert et Franck Ruffier dans « IEEE International Conférence on Intelligent Robots and Systems (IROS), Vilamoura : Portugal ». Cet article est dénommé par la suite « article IROS ».

L'article IROS présente un microdrone, à savoir un hélicoptère à deux rotors, comprenant un corps principal, auquel est attachée une tête de détection de terrain munie d'un « œil composite ». L'œil composite est constitué de quatre capteurs de flux optique répartis sur la tête de détection. La tête de détection est capable de tourner par rapport au corps principal grâce à un moteur pas à pas. Lorsque le microdrone est en vol, l'angle de la tête de détection par rapport au corps principal est contrôlé de manière à ce que l'orientation de la tête de détection reste la même dans le repère terrestre et compense l'angle du corps principal dans le repère terrestre.

Il s'est avéré que le système de navigation autonome de ce microdrone connu n'est pas toujours capable d'éviter tous les obstacles dans un environnement encombré et/ou en présence d'obstacles en mouvement.

Le document WO 2004/027434 A1 présente dans sa figure 1 un système de stabilisation d'hélicoptère 1 comprenant une nacelle 5 à capteur optique 3 et des capteurs de rotation 9 et 10. La nacelle 5 est fixe par rapport à l'hélicoptère 1. Ce système connu est complexe et très sensible aux vibrations.

L'article "OCTAVE, a bioinspired visuo-motor control system for the guidance of Micro-Air-Vehicles" by Franck Ruffier et al., PROCEEDINGS OF SPIE, SPIE, US, vol. 5119, no. 1, 19 mai 2003, pages 1-12 traite d'un autopilote visuel pour petits engins volants.

Un but de la présente invention est de réaliser un autopilote pour drone, microdrone ou nanodrone amélioré afin de permettre au drone, microdrone ou nanodrone de mieux naviguer dans un environnement escarpé et/ou en mouvement.

Un autre but de la présente invention est de réaliser un autopilote pour microdrone ou nanodrone dépourvu de centrale inertielle. En effet, une centrale inertielle ne peut être embarquée sur un microdrone ou nanodrone qu'avec difficultés, en raison de sa taille, de son poids, et de ses besoins en puissance de calcul.

Selon l'invention, ces buts sont atteints par un dispositif tel que défini ci-dessus, caractérisé en ce que le contrôleur est adapté à estimer la direction de la perpendiculaire à la surface dans ledit repère sur la base desdits signaux, et à tourner, à l'aide dudit système d'orientation, la ligne de visée de la zone de vision de chaque capteur dans une direction séparée d'un angle de réorientation déterminé de la direction de ladite perpendiculaire.

En réorientant la ligne de visée de la zone de détection du capteur à un angle de réorientation déterminé par rapport à la direction de la perpendiculaire à la surface, le dispositif de repérage de surface selon l'invention permet de mesurer une grandeur fonction de la distance aux objets environnants plus précise. L'engin peut ainsi se déplacer sans encombre en évitant d'éventuels obstacles qu'il peut détecter en avance, par exemple en orientant la ligne de visée vers le sens du déplacement en présence d'un obstacle pentu.

Selon des modes de réalisation préférés, le dispositif selon l'invention comprend l'une, plusieurs ou toutes les caractéristiques suivantes, dans toutes les combinaisons techniquement possibles :

- l'angle de réorientation est compris entre 0 et 90°;

- chaque capteur est un capteur de flux optique, et le contrôleur est adapté à estimer la direction de la perpendiculaire à la surface par détermination de la direction de flux optique maximal sur la base des signaux délivrés par chaque capteur de flux optique ;

- le contrôleur est adapté à déterminer la direction de flux optique maximal en exécutant les étapes suivantes :

  a) détermination de la fonction du flux optique de l'orientation de la ligne de visée de la zone de détection dans ledit repère par analyse de régression des signaux de flux optique fournis par chaque capteur de flux optique, notamment par la méthode des moindres carrés ; et

  b) détermination, de préférence par dérivation de ladite fonction, de l'orientation de la ligne de visée de la zone de détection pour laquelle ladite fonction a un maximum ;

- le contrôleur est en outre adapté à calculer un indice de confiance en fonction desdits signaux, et à valider ou rejeter l'estimation de la direction de la perpendiculaire à la surface en fonction de la valeur de l'indice de confiance ;

- la tête de détection comprend quatre capteur de flux optiques, à savoir un capteur ventral avant, un capteur ventral arrière, un capteur dorsal avant, et un capteur dorsal arrière ;

- le système d'orientation de zone de détection comprend un actionneur, notamment un moteur pas à pas, apte à tourner la tête de détection de surface autour de l'axe de dérive ;

- un ensemble de mesure de flux optique comprenant une matrice de photodétecteurs couvrant un champ de détection sensiblement de 360° x 60° autour de l'axe de dérive, et le système d'orientation de la zone de détection est apte à sélectionner un ou plusieurs sous-ensembles desdits photodétecteurs pour représenter chacun desdits capteurs ;

- la tête de détection est en outre équipée d'au moins un capteur de gyro-stabilisation de la tête de détection pour la compensation des mouvements de rotation en vol dudit engin mobile.

L'invention concerne également un microdrone aérien à déplacement autonome comprenant un dispositif tel que défini ci-dessus, le contrôleur étant adapté à contrôler l'actionneur de manière à aligner l'axe d'ascension de la tête de détection à la direction estimée de la perpendiculaire à la surface et ainsi à maintenir l'axe d'avance de la tête de détection parallèle à la pente locale de la surface survolée par le microdrone.

De préférence, le microdrone comprend en outre un gyromètre et/ou un anémomètre pour le contrôle de la vitesse linéaire d'avance du microdrone.

Selon l'invention, les buts ci-dessus sont également atteints par un procédé de repérage de surface lors d'un déplacement à une distance de ladite surface, le procédé étant caractérisé par les étapes consistant à :

a) prévoir une zone de détection centrée sur une ligne de visée;

b) mesurer une grandeur fonction de ladite distance à la surface dans la zone de détection prévue;

c) estimer la direction de la perpendiculaire à la surface et ainsi la direction de distance minimale à la surface sur la base de la grandeur mesurée ;

d) réorienter la ligne de visée de la zone de détection dans une direction séparée d'un angle de réorientation $\gamma$ déterminé de la direction de ladite perpendiculaire.

Selon des modes de réalisation préférés, le procédé selon l'invention comprend l'une, plusieurs ou toutes les caractéristiques suivantes, dans toutes les combinaisons techniquement possibles :

- l'étape b) consiste à mesurer le flux optique, et l'étape c) comprend :

  i) la détermination de la fonction du flux optique de l'orientation de la ligne de visée de la zone de détection par analyse de régression des mesures de flux optique, notamment par la méthode des moindres carrés ; et

  ii) la détermination, de préférence par dérivation de ladite fonction, de l'orientation de la ligne de visée de la zone de détection pour laquelle ladite fonction a un maximum ;

- le procédé est exécuté avec le dispositif tel que défini ci-dessus ou avec le microdrone tel que défini ci-dessus.

L'invention sera mieux comprise à la lecture de la description détaillée suivante, faite en référence aux dessins annexés, parmi lesquels :

La figure 1 est une vue en perspective simplifiée d'un microdrone de type hélicoptère selon un premier mode de réalisation exemplaire de l'invention ;
La figure 2 est un schéma illustrant les repères et grandeurs utilisés dans l'invention ;
La figure 3 illustre les trois boucles d'asservissement selon l'invention contrôlant respectivement la vitesse d'avance linéaire et l'altitude du microdrone, et l'orientation de la tête de détection de terrain du microdrone ;
Les figures 4 a) et b) illustrent l'amélioration de la détection d'obstacles grâce à l'invention ;

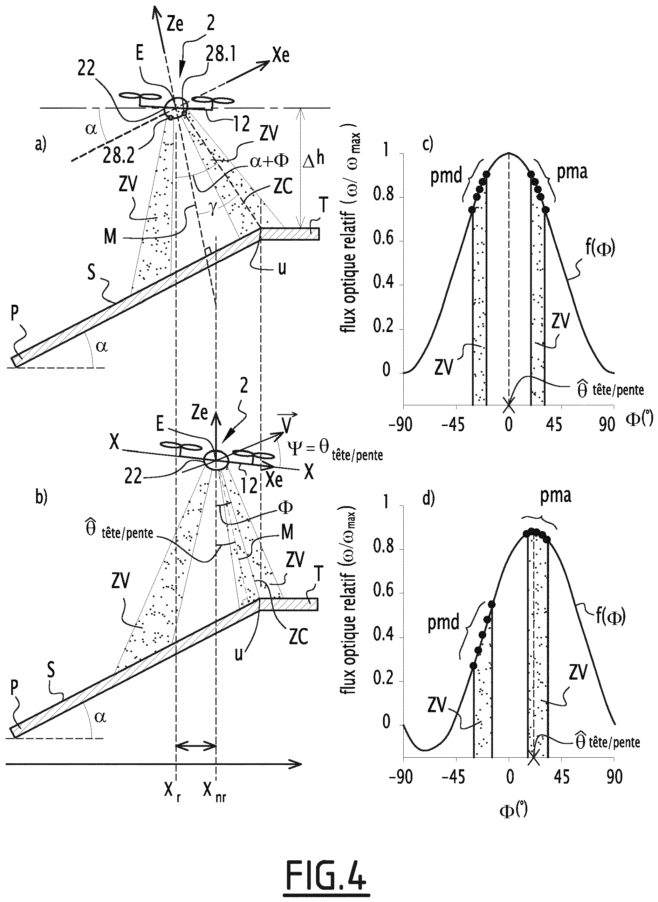

Les figures 4 c) et d) montrent l'évolution du flux optique en fonction de l'orientation de la ligne de visée de la zone de détection d'un capteur de flux optique, et les points de mesure de flux optique obtenus par l'ensemble de capteurs locaux de mouvement ventraux inclus dans un capteur de flux optique ;

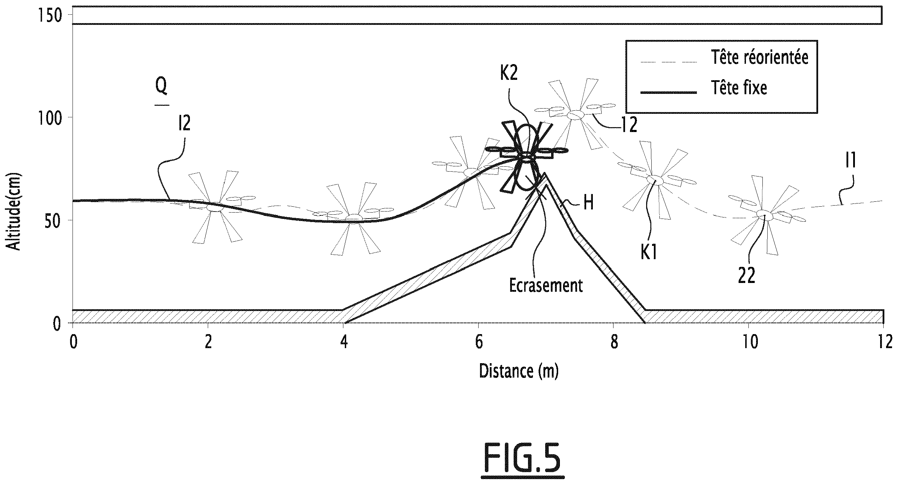

La figure 5 présente le comportement d'un microdrone traditionnel avec une tête de détection fixe par rapport à son corps principal et d'un microdrone selon l'invention faces à un relief escarpé ;

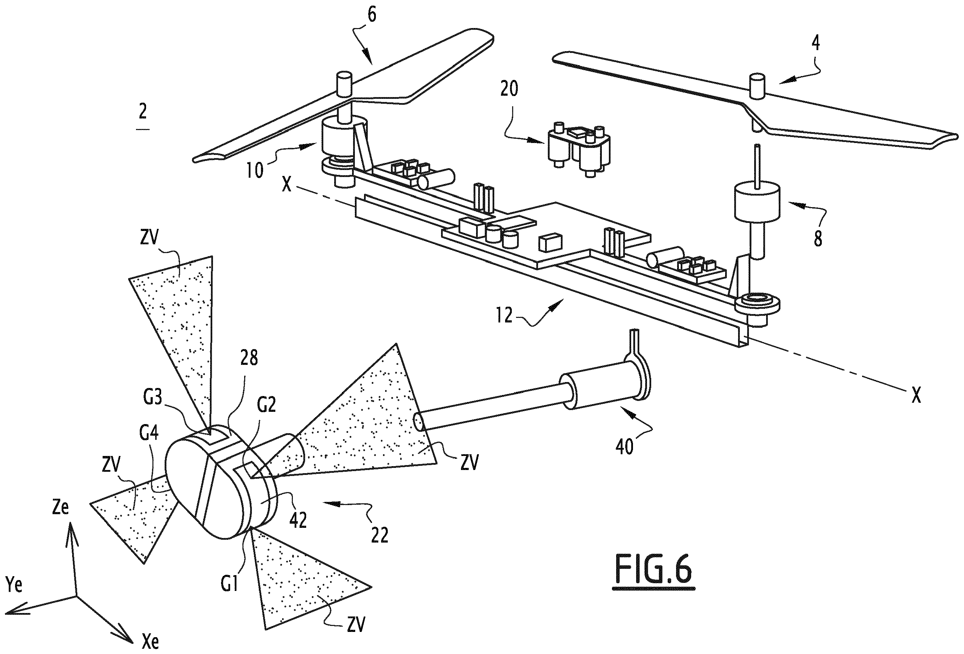

La figure 6 est une vue en perspective simplifiée d'un microdrone de type hélicoptère selon un second mode de réalisation exemplaire de l'invention ; et

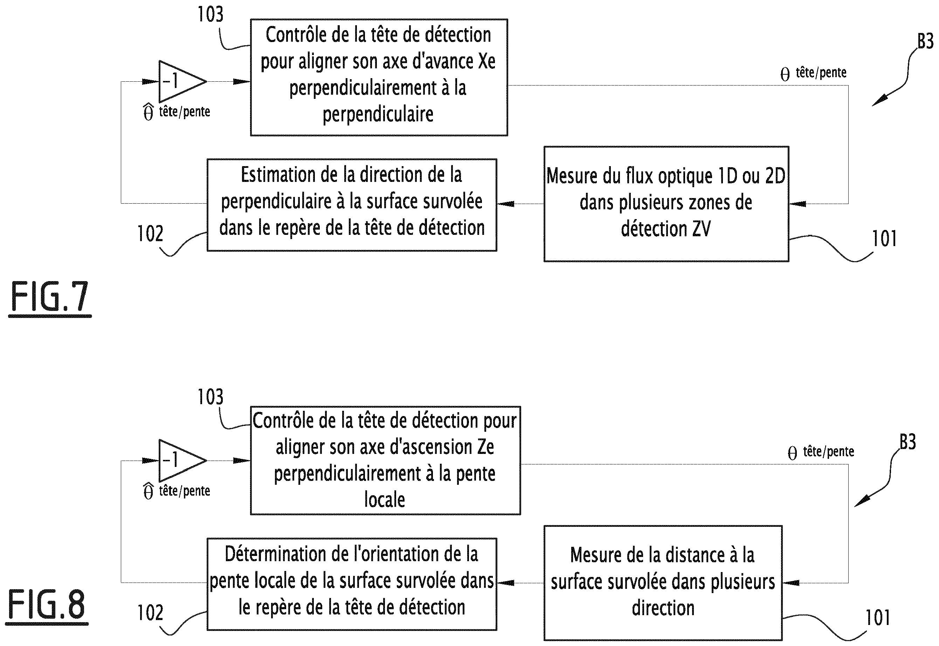

Les figures 7 et 8 illustrent deux variantes préférées de la boucle d'asservissement selon l'invention contrôlant l'orientation de la tête de détection du microdrone.

## Considérations d'ordre général

La présente invention s'applique de préférence aux drones d'envergure, aux microdrones et au nanodrones volants équipés de capteurs de flux optique. Néanmoins, l'invention n'est pas limitée à cela. Elle peut également s'appliquer à d'autres engins mobiles à distance d'une surface, tels qu'un robot poisson, un vaisseau spatial, etc....

Mis à part les capteurs de flux optique, des capteurs de distance tels que des capteurs à ultrason, des capteurs à laser, des capteurs à radar, des capteurs à sonar, etc...., ou des capteurs mesurant une grandeur fonction de la distance tels qu'un capteur basé sur le sens électrique, peuvent également être utilisés dans le cadre de l'invention.

## Premier mode de réalisation

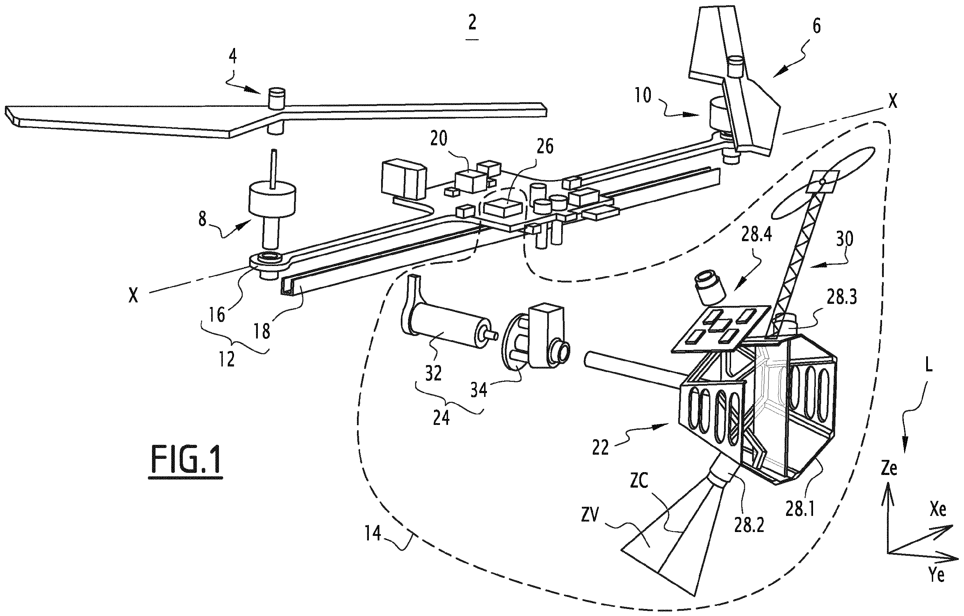

La figure 1 montre un microdrone 2 selon l'invention. Ce microdrone pesant environ 0,08 kg est un hélicoptère à deux rotors 4, 6 avec une envergure d'environ 0,5 m. Le microdrone 2 est capable de voler de façon autonome en pilotant sa vitesse d'avance linéaire et son altitude sur la base de mesures de flux optiques. Il peut notamment suivre un sol et un plafond et atterrir. Il a la particularité de pouvoir naviguer sans mesures dans le repère inertiel terrestre.

Les microdrones ou nanodrones de ce type trouvent des applications dans des missions de recherche, de reconnaissance ou de sauvetage, notamment lorsque le relief est escarpé ou au milieu d'immeubles et/ou lorsque la navigation par GPS n'est pas possible ou souhaitable.

Le microdrone 2 comporte, en plus des deux rotors 4, 6, deux moteurs électriques 8, 10 pour l'entraînement des rotors, un corps principal 12, et un dispositif de repérage de terrain 14. Le corps principal 12 définit un axe longitudinal X-X. Il comporte un circuit imprimé 16 et une barre 18 de renfort du circuit imprimé 16, de préférence en fibres de carbone. La barre de renfort 18 a de préférence une longueur d'environ 0,25 m. De préférence, un gyromètre 20 mesurant la vitesse de tangage du microdrone 2 est disposé sur le circuit imprimé 16.

Le dispositif de repérage de terrain 14 est délimité à la figure 1 par des pointillés. Il comprend une tête de détection de terrain 22, un système 24 d'orientation de zone de détection et un contrôleur 26 pilotant le microdrone 2.

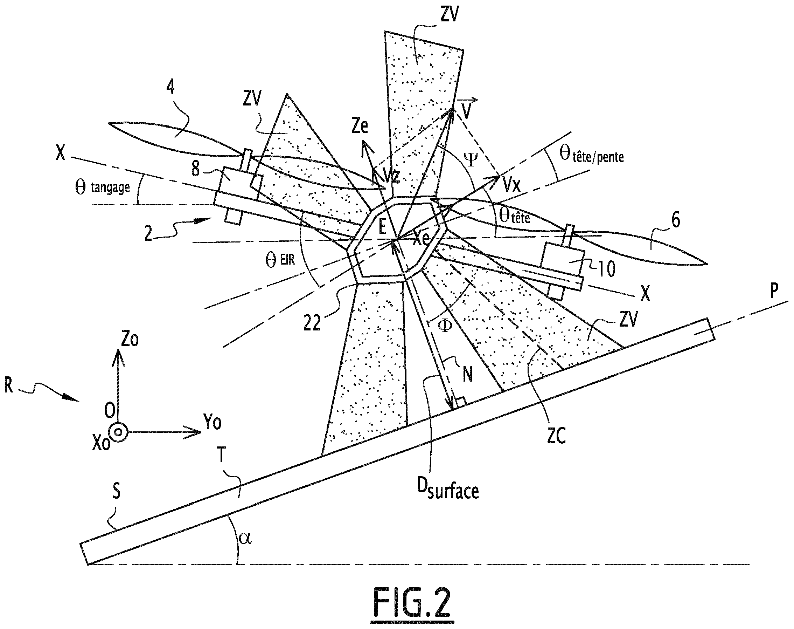

La tête de détection de terrain 22 définit un repère local L lié à la tête de détection, de préférence orthonormé, avec une origine E (cf. la figure 2) au centre de la tête de détection 22, un axe d'avance Xe, un axe de dérive Ye, et un axe d'ascension Ze.

Dans l'exemple illustré aux figures 1 et 2, la tête de détection 22 est munie de quatre capteurs de flux optique 28 répartis sur celle-ci. On distingue un capteur ventral avant 28.1 apte à mesurer un flux optique ventral avant $\omega_{va}$, un capteur ventral arrière 28.2 apte à mesurer un flux optique ventral arrière $\omega_{vd}$, un capteur dorsal avant 28.3 apte à mesurer un flux optique dorsal avant $\omega_{da}$, et un capteur dorsal arrière 28.4 apte à mesurer un flux optique dorsal arrière $\omega_{dd}$. Chaque capteur de flux optique 28 couvre une zone de détection ZV centrée sur une ligne de visée ZC. Chaque capteur de flux optique 28 comprend de préférence un ensemble de cinq capteurs locaux de mouvement séparés par un angle connu.

On notera que la tête de détection 22 peut également disposer de capteurs de flux optique latéraux.

Dans une variante, la tête de détection 22 dispose également d'un anémomètre 30 mesurant la vitesse de l'air en vol. En outre, la tête de détection 22 peut être équipée de capteurs de gyro-stabilisation, tels que des capteurs GPS ou des gyromètres. Ces capteurs permettent de prendre en compte les mouvements de bascule fréquents du microdrone 2 en vol et ainsi d'améliorer les mesures des capteurs de flux optique 28.

Dans une autre variante, la tête de détection 22 peut disposer de capteurs de flux optique à caméra à faible champ de vue ou à très grand angle. Les capteurs de flux optique peuvent également comprendre une combinaison d'une caméra et d'un miroir afin de créer un champ visuel panoramique.

Dans le mode de réalisation selon la figure 1, le système 24 d'orientation de zone de détection ZV comprend un moteur 32, de préférence un moteur pas à pas, combiné avec un réducteur 34. Le moteur 32 permet de faire tourner la tête de détection 22 autour de l'axe de dérive Ye, et ainsi de modifier la zone de détection ZV des capteurs de flux optique 28.

Le contrôleur 26 est un microcontrôleur disposé sur le circuit imprimé 16.

En référence à la figure 2, on va maintenant identifier les grandeurs géométriques utilisées dans le cadre de l'invention. La figure 2 montre le microdrone 2 en vol au dessus d'un terrain T de pente locale P et de surface S.

On notera que, dans le contexte de l'invention, le terme « terrain » se réfère à tout type de relief ou interface que le microdrone est amené à suivre en vol. Il peut notamment s'agir d'un sol, d'un plafond, de la surface d'une étendue d'eau, d'une paroi, d'un fond sous-marin, etc.

On dénote par R un repère inertiel terrestre avec une origine O et trois axes Xo (transversal), Yo (longitudinal) et Zo (vertical). On dénote par $\Phi$ l'angle d'élévation entre l'axe d'ascension Ze de la tête de détection 22 et la ligne de visée ZC de la zone de détection ZV d'un capteur de flux optique 28. De préférence, l'angle d'élévation $\Phi$ est de l'ordre de 23°, et la zone de détection ZV couvre environ 24° fois 12°.

Le vecteur V représente la vitesse linéaire instantanée du microdrone 2. $\Psi$ est l'angle entre le vecteur V et l'axe d'avance Xe de la tête de détection 22. On dénote par Vx la composante de la vitesse linéaire V selon l'axe d'avance Xe, Vy la composante de la vitesse linéaire V selon l'axe de dérive Ye, et Vz la composante de la vitesse linéaire V selon l'axe d'ascension Ze.

L'angle $\alpha$ est l'angle entre la pente locale P du terrain T survolé par le microdrone 2 et l'horizontale Xo-Yo du repère terrestre R.

La distance Dsurface est la distance entre la surface S du terrain T et le centre E de la tête de détection 22 selon la normale N à la pente P du terrain T.

L'angle $\theta_{tangage}$ est l'angle entre l'axe longitudinal X-X du microdrone 2 et l'horizontale Xo-Yo du repère terrestre R.

L'angle $\theta_{tête}$ est l'angle entre l'axe d'avance Xe de la tête de détection 22 et l'horizontale Xo-Yo du repère terrestre R.

L'angle $\theta_{EiR}$ est l'angle entre l'axe longitudinal X-X du microdrone 2 et l'axe d'avance Xe de la tête de détection 22.

L'angle $\theta_{tête/pente}$ est l'angle entre l'axe d'avance Xe de la tête de détection 22 et la pente locale P du terrain T.

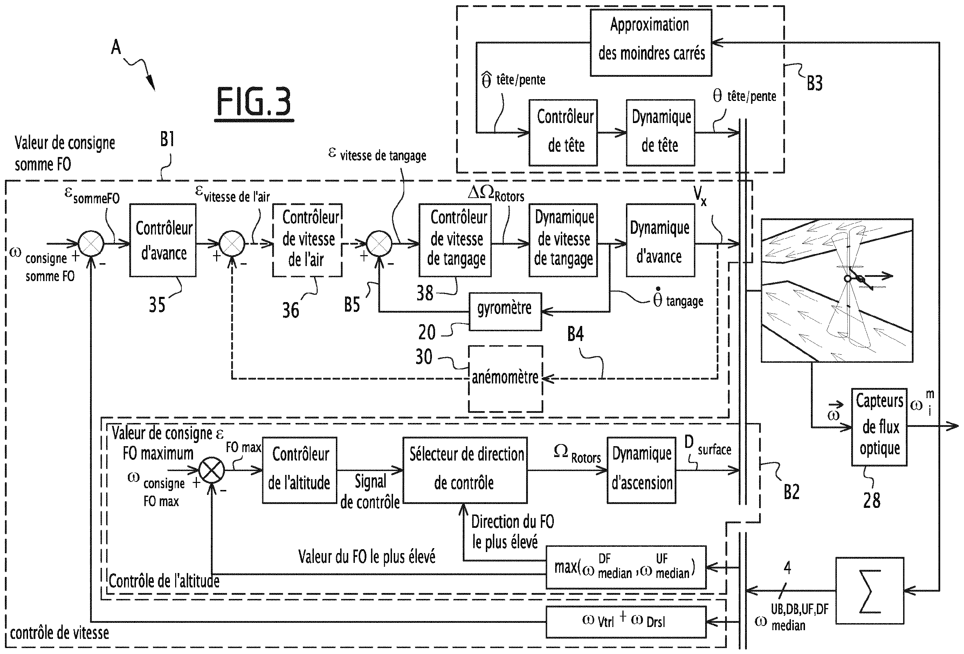

Sur la figure 3, on voit un schéma de principe de l'algorithme de navigation A selon l'invention implanté dans le microcontrôleur 26. L'algorithme A comprend :

- une boucle B1 d'asservissement de la vitesse d'avance linéaire Vx du microdrone 2,
- une boucle B2 d'asservissement de l'altitude du microdrone 2, c'est-à-dire d'asservissement de la distance Dsurface du microdrone 2 au terrain T, et
- une boucle d'asservissement B3 de l'orientation des zones de détection ZV des capteurs de flux optiques 28.

Chaque boucle d'asservissement B1, B2, B3 est délimitée par des pointillés.

La boucle d'asservissement B2 selon l'invention est identique à la boucle d'asservissement correspondante décrite dans l'article IROS. Pour une explication détaillée de cette boucle d'asservissement, il est fait référence à cet article dont le contenu correspondant est incorporé dans la présente description.

La boucle d'asservissement B1 selon l'invention est comparable à la boucle d'asservissement correspondante décrite dans l'article IROS. Elle contient notamment également un contrôleur d'avance 35. Pour une explication détaillée des éléments identiques de ces deux boucles d'asservissement, il est fait référence à cet article dont le contenu correspondant est incorporé dans la présente description.

Comparé à la boucle d'asservissement de la vitesse linéaire d'avance connue de l'article IROS, la boucle d'asservissement B1 selon l'invention prend en outre en compte les mesures de l'anémomètre 30 et les mesures du gyromètre 20 à l'aide de deux boucles d'asservissement supplémentaires B4 et B5 imbriquées dans la boucle d'asservissement B1 et utilisant respectivement un contrôleur de vitesse de l'air 36 et un contrôleur de la vitesse de tangage 38.

Les boucles B1, B4 et B5 coopèrent de la manière suivante :
Le contrôleur d'avance 35 génère une valeur de consigne de vitesse de l'air en fonction du résultat de la comparaison entre la somme des flux optiques ventral et dorsal $\omega_{vtrl} + \omega_{drsl}$ (avec $\omega_{vtrl}$ proportionnel à $(\omega_{va} + \omega_{vd})$ et $\omega_{drsl}$ proportionnel à $(\omega_{da} + \omega_{dd})$) mesurés et une valeur de consigne $\omega_{consigne \; somme \; FO}$. La valeur de consigne de vitesse de l'air est ensuite comparée à la vitesse de l'air mesurée par l'anémomètre 30. En fonction du résultat de cette comparaison, le contrôleur de vitesse de l'air 36 génère une valeur de consigne de la vitesse de tangage du microdrone 2. La valeur de consigne de vitesse de tangage est ensuite comparée à la vitesse de tangage mesurée par le gyromètre 20. En fonction du résultat de cette comparaison, le contrôleur de vitesse de tangage 38 détermine la différence de poussée entre les deux rotors $\Delta\Omega_{rotors}$ qui est nécessaire pour obtenir la vitesse linéaire d'avance voulue.

On va maintenant décrire la nouvelle boucle d'asservissement B3 de l'orientation des zones de détection ZV des capteurs de flux optiques 28.

L'idée de base de cette boucle d'asservissement B3 est illustrée par les figures 4a) et 4b). Les figures 4a), 4b) montrent un microdrone 2 survolant un terrain T avec une pente P d'angle $\alpha$ se terminant dans une discontinuité u. On distingue également les zones de détection ZV des capteurs de flux optique ventraux.

A la figure 4b), la tête de détection 22 du microdrone 2 est fixe par rapport au corps principal 12, de telle façon que l'axe d'avance Xe de la tête de détection 22 est toujours parallèle à l'axe longitudinal X-X du corps principal 12. On s'aperçoit que lors du survol de la pente P, les zones de détection ZV des capteurs de flux optique sont orientées vers l'arrière par rapport au terrain T comparé au survol d'un terrain plat. Par conséquent, le microdrone 2 ne détecte la discontinuité u que tardivement à la position Xnr.

La demanderesse a découvert que la détection de discontinuités dans le terrain et ainsi la navigation du microdrone 2 est sensiblement améliorée en tournant la tête de détection 22 et ainsi les zones de détection ZV des capteurs de flux optique en fonction de la direction, dans le repère local L, du flux optique maximal détecté par les capteurs de flux optique. En effet, la direction de flux optique maximal correspond, notamment en présence de la boucle d'asservissement B2 conduisant le microdrone 2 à suivre le terrain T, à la direction dans laquelle la distance entre le centre E de la tête de détection 22 et la surface S du terrain T est minimale. En d'autres termes, la direction M de flux optique maximal coïncide avec la direction de la normale N à la surface S du terrain T passant par le centre E de la tête de détection 22. On pourrait aussi dire que la direction de flux optique maximal est la direction dans laquelle on « regarde » droit sur la surface S de terrain T survolé.

La direction M de flux optique maximal est par la suite identifiée dans le repère local L par l'angle $\widehat{\theta}_{t\hat{e}te/pente}$ qu'elle soutient avec l'axe d'ascension Ze.

Selon l'invention, on tourne la tête de détection 22 à l'aide du moteur 32 de façon à ce que la ligne de visée ZC de la zone de détection ZV du capteur ventral avant 28.1 soit séparée d'un angle de réorientation déterminé $\gamma$ de la direction M de flux optique maximal. L'angle de réorientation $\gamma$ est fixé de manière à ce que le capteur ventral avant 28.1 « regarde » suffisamment vers l'avant lorsque le microdrone 2 suit un terrain T. De préférence, l'angle de réorientation $\gamma$ est compris entre 0° et 90°, et, de manière particulièrement préférée, l'angle de réorientation $\gamma$ est sensiblement égal à 23°.

Il est avantageux de choisir l'angle d'élévation $\Phi$ (c'est-à-dire l'angle fixe entre l'axe d'ascension Ze de la tête de détection 22 et la ligne de visée ZC de la zone de détection ZV du capteur de flux optique ventral avant 28.1) pour l'angle de réorientation $\gamma$. En effet, dans ce cas, la boucle d'asservissement B3 maintient l'axe d'avance Xe de la tête de détection 22 parallèle à la pente locale P d'un terrain T survolé par le microdrone 2.

La figure 4a) montre le microdrone 2 avec la boucle d'asservissement B3 en action, c'est-à-dire lorsque la tête de détection 22 est asservie en rotation autour de l'axe de dérive Ye de façon à respecter l'angle de réorientation $\gamma$ qui est fixé à la valeur de l'angle d'élévation $\Phi$. On voit que la zone de détection ZV du capteur de flux optique ventral avant 28.1 est redressée par rapport à la figure 4b). Ainsi, la discontinuité u est détectée plus tôt par le microdrone 2 à la position Xr.

Les figure 4c) et 4d) montrent la fonction $\omega/\omega_{max} = f(\Phi)$, c'est-à-dire la dépendance du flux optique relatif $\omega/\omega_{max}$ de l'angle $\Phi$ par rapport à l'axe d'ascension Ze. La figure 4c) montre $f(\Phi)$ pour le cas représenté à la figure 4a), et la figure 4d) montre $f(\Phi)$ pour le cas représenté à la figure 4b). Sur chaque graphe 4c) et 4d), on a indiqué les points de mesure pma des cinq capteurs locaux de mouvement du capteur de flux optique ventral avant 28.1 et les points de mesure pmd des cinq capteurs locaux de mouvement du capteur de flux optique ventral arrière 28.2.

### Fondement mathématique

On va maintenant détailler le fondement mathématique de la boucle d'asservissement B3 selon l'invention : Grâce à l'article "Blur zone" de T. Whiteside et al., publié dans la revue scientifique Nature, 225 : 94-95, on sait que le flux optique $\omega$ varie avec l'orientation $\Phi$ de chaque capteur de flux optique 28 par rapport au repère local L de la tête de détection 22 selon l'équation suivante :

## Equation 1

$$\omega(\Phi) = \frac{\|\vec{V}\|}{D(\Phi)} \times \sin(90 - \Phi - \Psi)$$

En supposant que le capteur de flux optique 28 est orienté vers le bas, on peut démontrer géométriquement que la distance $D(\Phi)$ dépend de l'angle $\alpha$ de la pente P du terrain T survolé, de la distance Dsurface, de l'angle $\theta_{\text{tête/pente}}$, et de l'angle d'élévation $\Phi$ :

## Equation 2

$$D(\Phi) = D_{surface} \times \frac{\cos(\alpha)}{\cos(\Phi + \theta_{\text{tête/pente}})}$$

Grâce aux équations 1 et 2 on déduit:

## Equation 3

$$\omega(\Phi) = \frac{\|\vec{V}\|}{D_{surface} \times \cos(\alpha)} \times \cos(\Phi + \Psi) \times \cos(\Phi + \theta_{\text{tête/pente}})$$

Comme nous cherchons la direction de flux optique maximal afin de déterminer l'angle $\theta_{\text{tête/pente}}$, nous dérivons l'équation 3 :

## Equation 4

$$\frac{d\omega(\Phi)}{d\Phi} = \frac{-\|\vec{V}\|}{D_{surface} \times \cos(\alpha)} \times \left[\sin(\Phi + \Psi) \times \cos(\Phi + \theta_{\text{tête/pente}}) + \cos(\Phi + \Psi) \times \sin(\Phi + \theta_{\text{tête/pente}})\right]$$

Le maximum de la fonction cosinus est alors obtenu pour:

## Equation 5

$$\frac{d\omega(\Phi)}{d\Phi} = 0 \Rightarrow \hat{\theta}_{\text{tête/pente}} = -\frac{\Psi + \theta_{\text{tête/pente}}}{2}$$

Comme on peut le voir de l'équation 5, lorsque le microdrone 2 est en mouvement, le maximum du flux optique n'apparaît pas quand la tête de détection est parallèle à la surface suivie, mais à un angle qui dépend de l'angle $\theta_{\text{tête/pente}}$ et de l'angle $\Psi$.

Hypothèse : le vecteur vitesse V est toujours parallèle à la surface suivie :

## Equation 6

$$\Psi = \theta_{\text{tête/pente}}$$

En effet, la boucle d'asservissement B2 exploite les mesures de flux optique des capteurs de flux optique 28 pour maintenir le rapport entre la vitesse d'avance du microdrone 2 et la distance $D_{\text{surface}}$ à la surface S constant, ce qui se traduit par un suivi du terrain et donc le vecteur vitesse s'aligne à la surface suivie.

Dans ce cas, l'équation 5 devient :

## Equation 7

$$\widehat{\theta}_{\text{tête / pente}} = \theta_{\text{tête/pente}}$$

L'angle de réorientation estimé $\widehat{\theta}_{\text{tête / pente}}$ peut donc être utilisé pour réorienter la tête de détection 22 parallèle à la surface suivie car $\theta_{\text{EiR}} = \theta_{\text{EiR}} + \widehat{\theta}_{\text{tête / pente}}$ mène à $\theta_{\text{tête/pente}} = 0$.

A proximité de la position du flux optique maximal, selon l'équation 3, le flux optique varie selon :

## Equation 8

$$\omega(\Phi) \approx f(\Phi') = \frac{\left\|\vec{V}\right\|}{D_{surface} \times \cos(\alpha)} \times \cos^2(\Phi')$$

Par conséquent, il convient de prendre les mesures de tous les capteurs de flux optiques 28, chacun d'eux étant séparé l'un de l'autre d'un angle connu, et d'utiliser ces mesures pour identifier l'angle $\theta_{\text{tête/pente}}$.

On cherche les coefficients $\dfrac{\left\|\vec{V}\right\|}{D_{surface} \times \cos(\alpha)}$ et $\widehat{\theta}_{\text{tête / pente}}$ dans la fonction :

$$f(\Phi') = \frac{\left\|\vec{V}\right\|}{D_{surface} \times \cos(\alpha)} \times \cos^2\left(\Phi' - \widehat{\theta}_{\text{tête / pente}}\right)$$

qui donnent la meilleure approximation dans le sens de la méthode des moindres carrés à partir des mesures des flux optiques. Cela s'implémente facilement dans le microcontrôleur 26 car on peut estimer la fonction cosinus carré par une fonction polynôme du deuxième degré à l'aide d'un développement en série de Taylor au voisinage de 0 :

## Equation 9

$$f(\Phi') \approx \frac{\left\|\vec{V}\right\|}{D_{surface} \times \cos(\alpha)} \times \left(1 - \left(\Phi' - \widehat{\theta}_{\text{tête / pente}}\right)^2\right) \approx cst \times \left[-\Phi'^2 + 2 \times \widehat{\theta}_{\text{tête / pente}} \times \Phi' + \left(1 - \widehat{\theta}^2_{\text{tête / pente}}\right)\right]$$

Ce qui est équivalent à:

## Equation 10

$$\omega(\Phi) \approx a \times \Phi'^2 + b \times \Phi' + c$$

On définit X = [$\Phi'^2$, $\Phi'$, 1] et à l'aide de l'ensemble des mesures de flux optique $\Gamma$, on détermine les coefficients [a, b, c] avec la méthode des moindres carrés :

## Equation 11

$$[a, b, c] = inv\ (X * X') * X * \Gamma'$$

Dans cette expression, seul $\Gamma$ dépend des mesures de flux optique, tandis que le reste est constant et dépend uniquement de l'orientation fixe de chaque mesure de flux optique dans le repère local L.

Une multiplication de matrices suffit pour déterminer les coefficients [a; b; c], et après, on peut déterminer grâce aux équations 9 et 10 que l'angle $\widehat{\theta}_{tête/pente}$ est le suivant :

## Equation 12

$$\widehat{\theta}_{tête/pente} = -b/(2a)$$

Lors de simulations, il s'est avéré qu'avec le bruit s'ajoutant aux mesures de flux optiques, on peut aboutir à des mesures erronées de $\widehat{\theta}_{tête/pente}$, ce qui engendre des oscillations de la tête de détection 22 lors de l'asservissement.

Afin d'éliminer les mesures erronées, on calcule un « indice de confiance » :

## Equation 13

$$Confiance = \frac{\sum_i \left| X \times b - \omega_{\Phi_i}^{mes} \right|}{median\left(\omega_{\Phi_i}^{mes}\right)}$$

Une diminution de l'indice de confiance correspond à une similitude plus élevée entre les mesures de flux optique et la fonction cosinus carré approximée. L'angle $\widehat{\theta}_{tête/pente}$ est uniquement validé si l'indice de confiance est en dessous d'un seuil déterminé.

## Résultats expérimentaux

La figure 5 montre une expérience réalisée avec deux microdrones K1 et K2. Le microdrone K1 était équipé de la boucle d'asservissement B3 selon l'invention réorientant constamment sa tête de détection 22 parallèle au sol, tandis que la tête de détection 22 du microdrone K2 était fixe par rapport au corps principal 12.

La tâche des deux microdrones K1 et K2 était de naviguer dans un environnement escarpé Q comprenant un relief pointu H. On a constaté que le microdrone K2 détectait tardivement le relief pointu H et par conséquent s'écrasait contre celui-ci. En revanche, grâce au procédé de réorientation des zones de détection selon l'invention, le microdrone K1 arrivait à négocier le relief pointu H. La figure 5 montre les trajectoires I1 (pointillés) et I2 (trait continu) des microdrones K1 et K2.

### Deuxième mode de réalisation

La figure 6 montre un deuxième mode de réalisation d'un microdrone 2 selon l'invention. On s'intéresse ici uniquement aux différences par rapport au premier mode de réalisation selon la figure 1. Pour les éléments communs aux deux modes de réalisation, il est fait référence à la description ci-dessus.

Dans le deuxième mode de réalisation, la tête de détection 22 est fixée au corps principal 12 par une tige 40. Aucun mouvement relatif entre la tête de détection 22 et le corps principal 12 n'est donc possible. La tête de détection 22 est montée sur le corps principal 12 de façon à ce que l'axe d'avance Xe soit sensiblement parallèle à l'axe longitudinal X-X du corps principal 12.

Le capteur de flux optique 28 est ici constitué d'une matrice 42 de 84 x 15 photodétecteurs couvrant un champ de détection sensiblement de 360° x 60° autour de l'axe de dérive Ye. Parmi la multitude de photodétecteurs, on en choisit un sous-ensemble avec quatre groupes G1 à G4 qui couvrent des zones de détection ZV similaires à celles du premier mode de réalisation selon la figure 1.

La boucle d'asservissement B3 est implantée dans ce second microdrone de façon à sélectionner en temps réel différents sous-ensembles de photodétecteurs pour la mesure des flux optiques en fonction de l'angle de réorientation $\gamma$ estimé.

### Variantes préférées de la boucle d'asservissement B3 de l'orientation des zones de détection ZV des capteurs

La figure 7 montre un exemple de la boucle d'asservissement B3 telle qu'elle est implémentée dans le microdrone 2 selon les figures 1 et 6. Lors d'une première étape 101, les capteurs de flux optique 28 mesurent le flux optique $\omega$ en une ou deux dimensions (1D ou 2D) dans plusieurs zones de détection ZV. Lors d'une seconde étape 102, le microcontrôleur 26 estime la direction de la perpendiculaire à la surface S survolée dans le repère L de la tête de détection 22. Lors d'une troisième étape 103, la tête de détection 22 est réorientée de façon à aligner son axe d'avance Xe perpendiculairement à la perpendiculaire à la surface S survolée. Après la troisième étape 103, la boucle d'asservissement B3 reprend avec la première étape 101, et ainsi de suite.

La figure 8 montre une variante de la boucle d'asservissement B3 utilisant des mesures de capteurs de distance au lieu de capteurs de flux optique.

### Revendications

1. Dispositif (14) de repérage de surface (S) pour le déplacement autonome à distance de cette surface (S) d'un engin mobile (2), le dispositif (14) de repérage de surface comprenant :

   a) une tête de détection de surface (22) définissant un repère (L) lié à la tête de détection avec une origine (E) au centre de la tête de détection (22), un axe d'avance (Xe), un axe de dérive (Ye), et un axe d'ascension (Ze), la tête de détection (22) comportant au moins un capteur (28) de mesure d'une grandeur ($\omega$) fonction de la distance ($D_{surface}$) du centre (E) de la tête de détection à la surface (S), chaque capteur (28) couvrant une zone de détection (ZV) centrée sur une ligne de visée (ZC) ;
   b) un moyen (24) d'orientation de la zone de détection (ZV) pour chaque capteur (28) par rotation de la zone de détection autour (ZV) de l'axe de dérive (Ye); et
   c) un contrôleur (26) adapté à recevoir et à traiter les signaux provenant de chaque capteur (28) et à contrôler le système (24) d'orientation de la zone de détection (ZV) sur la base desdits signaux,

   **caractérisé en ce que** le contrôleur (26) est adapté à estimer la direction de la perpendiculaire (N) à la surface (S) dans ledit repère (L) sur la base desdits signaux, et à réorienter, à l'aide dudit système d'orientation (24), la ligne de visée (ZC) de la zone de détection de chaque capteur (28) dans une direction séparée d'un angle de réorientation ($\gamma$) déterminé de la direction de ladite perpendiculaire (N).

2. Dispositif selon la revendication 1, dans lequel le moyen d'orientation de la zone de détection (ZV) est un système d'orientation de la zone de détection (ZV).

3. Dispositif selon la revendication 1, dans lequel chaque capteur (28) comprend une matrice (42) de photodétecteurs et où le moyen d'orientation de la zone de détection (ZV) est apte à sélectionner un ou plusieurs sous-ensembles (G1, G2, G3, G4) desdits photodétecteurs pour représenter chacun desdits capteurs (28).

**4.** Dispositif selon la revendication 1, dans lequel l'angle de réorientation ($\gamma$) est compris entre 0 et 90°.

**5.** Dispositif selon la revendication 1 ou 2, dans lequel chaque capteur (28) est un capteur de flux optique, et dans lequel le contrôleur (26) est adapté à estimer la direction de la perpendiculaire (N) à la surface (S) par détermination de la direction (M) de flux optique maximal sur la base des signaux délivrés par chaque capteur de flux optique (28).

**6.** Dispositif selon la revendication 5, dans lequel le contrôleur (26) est adapté à déterminer la direction (M) de flux optique maximal en exécutant les étapes suivantes :

a) détermination de la fonction ($\omega = f(\Phi)$) du flux optique couvrant la zone de détection (ZV) centré sur la ligne de visée (ZC) en fonction d'une angle d'élévation entre l'axe d'ascension (Ze) de la tête de détection (22) et la ligne de visée (ZC) dans ledit repère (L) par analyse de régression des signaux de flux optique fournis par chaque capteur de flux optique (28), notamment par la méthode des moindres carrés ; et
b) détermination, de préférence par dérivation de ladite fonction ($\omega = f(\Phi)$), de la direction de flux optique maximal comme l'angle $\left(\overline{\theta}_{t\hat{e}te/pente}\right)$ entre l'axe d'avance (Xe) de la tête de détection (22) et une pente locale (P) de la surface (S) pour laquelle ladite fonction ($\omega = f(\Phi)$) a un maximum.

**7.** Dispositif selon l'une quelconque des revendications précédentes, dans lequel le contrôleur (26) est en outre adapté à calculer un indice de confiance en fonction desdits signaux, et à valider ou rejeter l'estimation de la direction de la perpendiculaire (N) à la surface (S) en fonction de la valeur de l'indice de confiance.

**8.** Dispositif selon la revendication 1 ou 2, dans lequel la tête de détection (22) comprend quatre capteur de flux optiques, à savoir un capteur ventral avant (28.1), un capteur ventral arrière (28.2), un capteur dorsal avant (28.3), et un capteur dorsal arrière (28.4).

**9.** Dispositif selon la revendication 2, dans lequel le système d'orientation de zone de détection (24) comprend un actionneur (32), notamment un moteur pas à pas, apte à tourner la tête de détection de surface (22) autour de l'axe de dérive (Ye).

**10.** Dispositif selon l'une quelconque des revendications précédentes, dans lequel la tête de détection (22) est en outre équipée d'au moins un capteur de gyro-stabilisation de la tête de détection pour la compensation des mouvements de rotation en vol dudit engin mobile.

**11.** Microdrone aérien à déplacement autonome (2) comprenant un dispositif selon la revendication 9, le contrôleur (26) étant adapté à contrôler l'actionneur (32) de manière à aligner l'axe d'ascension (Ze) de la tête de détection (22) à la direction estimée de la perpendiculaire (N) à la surface (S) et ainsi à maintenir l'axe d'avance (Xe) de la tête de détection (22) parallèle à la pente locale (P) de la surface (S) survolée par le microdrone (2).

**12.** Microdrone selon la revendication 11, comprenant en outre un gyromètre (20) et/ou un anémomètre (30) pour le contrôle de la vitesse linéaire d'avance du microdrone (2).

**13.** Procédé de repérage de surface (S) pour le déplacement autonome à distance (Dsurface) de cette surface (S) d'un engin mobile (2), le procédé étant **caractérisé par** les étapes consistant à :

a) prévoir une zone de détection (ZV) centrée sur une ligne de visée (ZC);
b) mesurer une grandeur ($\omega$) fonction de ladite distance ($D_{surface}$) entre l'engin mobile (2) et la surface (S) dans la zone de détection (ZV) prévue;
c) estimer la direction de la perpendiculaire (N) à la surface (S) et ainsi la direction de distance minimale à la surface (S) sur la base de la grandeur ($\omega$) mesurée ;
d) réorienter la ligne de visée (ZC) de la zone de détection (ZV), en utilisant un moyen (24) d'orientation de la zone de détection (ZV), dans une direction séparée d'un angle de réorientation $\gamma$ déterminé de la direction de ladite perpendiculaire (N).

**14.** Procédé selon la revendication 13, dans lequel l'étape b) consiste à mesurer le flux optique, et dans lequel l'étape c) comprend :

i) la détermination de la fonction ($\omega$ = f($\Phi$)) du flux optique couvrant la zone de détection (ZV) centré sur la ligne de visée (ZC) en fonction d'une angle entre l'axe d'ascension (Ze) de l'engin mobile (2) et la ligne de visée (ZC) par analyse de régression des mesures de flux optique, notamment par la méthode des moindres carrés ; et

ii) la détermination, de préférence par dérivation de ladite fonction ($\omega$ = f($\Phi$)), de la direction de flux optique maximal comme l'angle ($\widehat{\theta}_{tête / pente}$) entre une axe d'avance (Xe) de l'engin mobile (2) et une pente locale (P) de la surface (S) pour laquelle ladite fonction ($\omega$ = f($\Phi$)) a un maximum.

**15.** Procédé selon la revendication 13 ou 14, exécuté avec le dispositif selon l'une quelconque des revendications 1 à 10 ou avec le microdrone selon la revendication 11 ou 12.


**Patentansprüche**

**1.** Vorrichtung (14) zur Oberflächenortung (S) für die autonome Bewegung eines mobilen Geräts (2) im Abstand von dieser Oberfläche (S), wobei die Vorrichtung (14) zur Oberflächenortung aufweist:

a) einen Oberflächen-Detektionskopf (22), der ein mit dem Detektionskopf verbundenes Koordinatensystem (L) definiert, mit einem Ursprung (E) im Zentrum des Detektionskopfs (22), einer Vorrückachse (Xe), einer Derivationsachse (Ye) und einer Aufstiegsachse (Ze), wobei der Detektionskopf (22) aufweist wenigstens einen Sensor (28) zur Messung einer Größe ($\omega$) abhängig vom Abstand ($D_{surface}$) des Zentrums (E) des Detektionskopfs zur Oberfläche (S), wobei jeder Sensor (28) einen Detektionsbereich (ZV) abdeckt, der zu einer Visierlinie (ZC) zentriert ist,

b) ein Mittel (24) zur Ausrichtung des Detektionsbereichs (ZV) für jeden Sensor (28) mittels Drehung des Detektionsbereichs um (ZV) die Derivationsachse (Ye), und

c) eine Steuervorrichtung (26), die angepasst ist, um die Signale, die von jedem Sensor (28) stammen, zu empfangen und zu verarbeiten und um das System (24) zur Ausrichtung des Detektionsbereichs (ZV) auf Basis der besagten Signale zu steuern,

**dadurch gekennzeichnet, dass** die Steuervorrichtung (26) angepasst ist zum Berechnen der Richtung der Senkrechten (N) zur Oberfläche (S) in dem Koordinatensystem (L) auf Basis der besagten Signale und zum Neuausrichten, mittels des Systems zur Ausrichtung (24), der Visierlinie (ZC) des Detektionsbereichs jedes Sensors (28) in eine Richtung, die um einen ermittelten Neuausrichtungswinkel ($\gamma$) von der Richtung der besagten Senkrechten (N) getrennt ist.

**2.** Vorrichtung gemäß Anspruch 1, wobei das Mittel zur Ausrichtung des Detektionsbereichs (ZV) ein System zur Ausrichtung des Detektionsbereichs (ZV) ist.

**3.** Vorrichtung gemäß Anspruch 1, wobei jeder Sensor (28) eine Matrix (42) von Fotodetektoren aufweist und wobei das Mittel zur Ausrichtung des Detektionsbereichs (ZV) imstande ist, eine oder mehrere Untergruppen (G1, G2, G3, G4) der besagten Fotodetektoren auszuwählen zum Repräsentieren jedes der besagten Sensoren (28).

**4.** Vorrichtung gemäß Anspruch 1, wobei der Neuausrichtungswinkel ($\gamma$) zwischen und 0 und 90° liegt.

**5.** Vorrichtung gemäß Anspruch 1 oder 2, wobei jeder Sensor (28) ein optischer-Fluss-Sensor ist und wobei die Steuervorrichtung (26) angepasst ist zum Berechnen der Richtung der Senkrechten (N) zur Oberfläche (S) mittels Ermittlung der Richtung (M) des maximalen optischen Flusses auf der Basis der von jedem optischer-Fluss-Sensor (28) gelieferten Signale.

**6.** Vorrichtung gemäß Anspruch 5, wobei die Steuervorrichtung (26) angepasst ist, um die Richtung (M) des maximalen optischen Flusses zu ermitteln mittels Durchführens der folgenden Schritte:

a) Ermitteln der Funktion ($\omega$ = f($\Phi$)) des optischen Flusses, der den Detektionsbereich (ZV) abdeckt, der zur Visierlinie (ZC) zentriert ist, in Abhängigkeit von einem Elevationswinkel zwischen der Aufstiegsachse (Ze) des Detektionskopfs (22) und der Visierlinie (ZC) in dem besagten Koordinatensystem (L) mittels Regressionsanalyse der optischer-Fluss-Signale, die von jedem optischer-Fluss-Sensor (28) geliefert werden, insbesondere mittels der Methode der kleinsten Quadrate, und

b) Ermitteln, bevorzugt durch Ableiten der besagten Funktion ($\omega = f(\Phi)$), der Richtung des maximalen optischen Flusses als den Winkel ($\hat{\theta}_{tête/pente}$) zwischen der Vorrückachse (Xe) des Detektionskopfs (22) und einer lokalen Neigung (P) der Oberfläche (S), für welche die besagte Funktion ($\omega = f(\Phi)$) ein Maximum hat.

7. Vorrichtung gemäß irgendeinem der vorhergehenden Ansprüche, wobei die Steuervorrichtung (26) ferner angepasst ist, um ein Konfidenzindiz zu berechnen in Abhängigkeit von den besagten Signalen und um die Berechnung der Richtung der Senkrechten (N) zu der Oberfläche (S) zu validieren oder zurückzuweisen in Abhängigkeit von dem Wert des Konfidenzindizes.

8. Vorrichtung gemäß Anspruch 1 oder 2, wobei der Detektionskopf (22) vier optischer-Fluss-Sensoren aufweist, nämlich einen ventralen vorderen Sensor (28.1), einen ventralen hinteren Sensor (28.2), einen dorsalen vorderen Sensor (28.3) und einen dorsalen hinteren Sensor (28.4).

9. Vorrichtung gemäß Anspruch 2, wobei das System zur Ausrichtung des Detektionsbereichs (24) aufweist einen Aktuator (32), insbesondere einen Schrittmotor, der imstande ist, den Oberflächen-Detektionskopf (22) um die Derivationsachse (Ye) zu drehen.

10. Vorrichtung gemäß irgendeinem der vorhergehenden Ansprüche, wobei der Detektionskopf (22) ferner ausgestattet ist mit wenigstens einem Sensor zur Gyro-Stabilisation des Detektionskopfes zur Kompensation von Drehbewegungen beim Flug des mobilen Geräts.

11. Autonom-sich-bewegende Flug-Mikrodrohne(2) mit einer Vorrichtung gemäß Anspruch 9, wobei die Steuervorrichtung (26) angepasst ist, um den Aktuator (32) zu steuern, um die Aufstiegsachse (Ze) des Detektionskopfs (22) auszurichten zur berechneten Richtung der Senkrechten (N) zur Oberfläche (S) und daher zum Halten der Vorrückachse (Xe) des Detektionskopfes (22) parallel zur lokalen Neigung (P) der Oberfläche (S), die von der Mikrodrohne (2) überflogen wird.

12. Mikrodrohne gemäß Anspruch 11, ferner aufweisend ein Gyrometer (20) und/oder ein Anemometer (30) für die Steuerung der linearen Vorrückgeschwindigkeit der Mikrodrohne (2).

13. Verfahren zur Oberflächenortung (S) für die autonome Bewegung eines mobilen Geräts (2) im Abstand (Dsurface) von dieser Oberfläche (S), wobei das Verfahren **gekennzeichnet ist durch** die Schritte, die bestehen aus:

   a) Vorsehen eines Detektionsbereichs (ZV), der zu einer Visierlinie (ZC) zentriert ist,
   b) Messen einer Größe ($\omega$) abhängig von dem besagten Abstand ($D_{surface}$) zwischen dem mobilen Gerät (2) und der Oberfläche (S) in dem vorgesehenen Detektionsbereich (ZV),
   c) Berechnen der Richtung der Senkrechten (N) zur Oberfläche (S) und daher der Richtung des minimalen Abstands zur Oberfläche (S) auf Basis der gemessenen Größe ($\omega$),
   d) Neuausrichten der Visierlinie (ZC) des Detektionsbereichs (ZV), mittels Verwendens eines Mittels (24) zur Ausrichtung des Detektionsbereichs (ZV), in eine Richtung, die um einen ermittelten Neuausrichtungswinkel $\gamma$ von der Richtung der besagten Senkrechten (N) getrennt ist.

14. Verfahren gemäß Anspruch 13, wobei der Schritt b) besteht aus Messen des optischen Flusses, und wobei der Schritt c) aufweist:

   i) das Ermitteln der Funktion ($\omega = f(\Phi)$) des optischen Flusses, der den Detektionsbereich (ZV) abdeckt, der zu der Visierlinie (ZC) zentriert ist, in Abhängigkeit von einem Winkel zwischen der Aufstiegsachse (Ze) des mobilen Geräts (2) und der Visierlinie (ZC) mittels Regressionsanalyse der optischer-Fluss-Messungen, insbesondere mittels der Methode der kleinsten Quadrate, und
   ii) das Ermitteln, bevorzugt mittels Ableitens der besagten Funktion ($\omega = f(\Phi)$), der Richtung des maximalen optischen Flusses als den Winkel ($\hat{\theta}_{tête/pente}$) zwischen der Vorrückachse (Xe) des mobilen Geräts (2) und einer lokalen Neigung (P) der Oberfläche (S), für welche die besagte Funktion ($\omega = f(\Phi)$) ein Maximum hat.

15. Verfahren gemäß Anspruch 13 oder 14, durchgeführt mittels einer Vorrichtung gemäß irgendeinem der Ansprüche 1 bis 10 oder mit einer Mikrodrohne gemäß Anspruch 11 oder 12.

**Claims**

1. A surface (S) identification device (14) for the autonomous movement of a moving vehicle (2) at a distance from that surface (S), the surface identification device (14) comprising:

   a) a surface detection head (22) defining a coordinate system (L) fixed to the detection head with an origin (E) at the center of the detection head (22), an axis of advance (Xe), a drift axis (Ye), an ascent axis (Ze), the detection head (22) including at least one measure sensor (28) for a quantity (w) depending on the distance ($D_{surface}$) of the center (E) of the detection head from the surface (S), each sensor (28) covering a detection zone (ZV) centered on a line of sight (ZC);
   b) means (24) for orienting the detection zone (ZV) for each sensor (28) by rotating the detection zone around (ZV) the drift axis (Ye); and
   c) a controller (26) suitable for receiving and processing the signals from each sensor (28) and controlling the system (24) for orienting the detection zone (ZV) based on said signals,

   **characterized in that** the controller (26) is configured for estimating the direction of the perpendicular (N) to the surface (S) in said coordinate system (L) based on said signals, and reorienting, by means of said orientation means (24), the line of sight (ZC) of the detection zone of each sensor (28) into a direction separated by a determined reorientation angle ($\gamma$) from the direction of said perpendicular (N).

2. The device according to claim 1, wherein the means (24) for orienting the detection zone (ZV) is an orientation system of the detection zone (ZV)

3. The device according to claim 1, wherein each sensor (28) comprises a matrix (42) of photodetectors et wherein the means (24) for orienting the detection zone (ZV) is able to select one or more subsets (G1, G2, G3, G4) of said photodetectors to represent each of said sensors

4. The device according to claim 1, wherein the reorientation angle ($\gamma$) is comprised between 0 and 90°.

5. The device according to claim 1 or 2, wherein each sensor (28) is an optical flow sensor, and wherein the controller (26) is configured for estimating the direction of the perpendicular (N) to the surface (S) by determining the maximum optical flow direction (M) based on the signals delivered by each optical flow sensor (28).

6. The device according to claim 5, wherein the controller (26) is configured for determining the maximum optical flow direction (M) by carrying out the following steps:

   a) determining the function (w = f($\Phi$)) of the optical flow covering the detection zone (ZV) centered on the line of sight (ZC) as a function of an elevation angle between the ascent axis (Ze) of the detection head (22) and the line of sight (ZC) in said coordinate system (L) by regression analysis of the optical flow signals provided by each optical flow sensor (28), in particular by the least squares method; and
   b) determining, preferably by differentiation of said function (w = f($\Phi$)), the direction of the maximal optical flow as the angle ($\widehat{\theta}_{head/slope}$) between the axis of advance (Xe) of the detection head (22) and a local slope (P) of the surface (S) for which said function ($\omega$ = f($\Phi$)) has a maximum.

7. The device according to any one of the preceding claims, wherein the controller (26) is further configured for computing a confidence index based on said signals, and validating or rejecting the estimate of the direction of the perpendicular (N) to the surface (S) based on the value of the confidence index.

8. The device according to claim 1 or 2, wherein the detection head (22) comprises four optical flow sensors, i.e., a front ventral sensor (28.1), a rear ventral sensor (28.2), a front dorsal sensor (28.3), and a rear dorsal sensor (28.4).

9. The device according to claim 2, wherein the detection zone orientation system (24) comprises an actuator (32), in particular a stepping motor, able to rotate the surface detection head (22) around the drift axis (Ye).

10. The device according to any one of the preceding claims, wherein the detection head (22) is further equipped with at least one gyro-stabilization sensor of the detection head to compensate the rotational movements of said moving vehicle during flight.

11. An aerial microdrone (2) with autonomous movement comprising a device according to claim 9, the controller (26) being configured for controlling the actuator (32) so as to align the axis of ascent (Ze) of the detection head (22) in the estimated direction of the perpendicular (N) to the surface (S) and thus to keep the axis of advance (Xe) of the detection head (22) parallel to the local slope (P) of the surface (S) overflown by the microdrone (2).

12. The microdrone according to claim 11, further comprising a gyrometer (20) and/or an airspeed indicator (30) for controlling the linear advance speed of the microdrone (2).

13. A surface (S) identification method for the autonomous movement of a moving vehicle at a distance ($D_{surface}$) from said surface (S), the method being **characterized by** the following steps:

   a) providing a detection zone (ZV) centered on a line of sight (ZC);
   b) measuring a quantity (w) depending on said distance ($D_{surface}$) between the moving vehicle and the surface (S) in the provided detection zone (ZV);
   c) estimating the direction of the perpendicular (N) to the surface (S) and thus the minimum distance direction from the surface (S) based on the measured quantity (w);
   d) reorienting the line of sight (ZC) of the detection zone (ZV), by using means (24) for orienting the detection zone (ZV), in a direction separated by a determined reorientation angle $\gamma$ from the direction of said perpendicular (N).

14. The method according to claim 13, wherein step b) consists of measuring the optical flow, and step c) comprises:

   i) determining the function ($\omega = f(\Phi)$) of the optical flow covering the detection zone (ZC) centered on the line of sight (ZC) as function of an angle between the ascent axis (Ze) of the moving vehicle (2) and the line of sight (ZC) by regression analysis of the optical flow measurements, in particular by the least squares method; and
   ii) determining, preferably by differentiation of said function ($w = f(\Phi)$), the direction of the maximal optical flow as the angle $(\widehat{\theta}_{head/slope})$ between an axis of advance (Xe) of the moving vehicle (2) and a local slope (P) of the surface (S) for which said function ($\omega = f(\Phi)$) has a maximum.

15. The method according to claim 13 or 14, carried out with the device according to any one of claims 1 to 10 or with the microdrone according to claim 11 or 12.

**FIG.1**

FIG.2

FIG.3

FIG.4

FIG.5

**FIG.6**

## FIG.7

103 — Contrôle de la tête de détection pour aligner son axe d'avance Xe perpendiculairement à la perpendiculaire

$\hat{\theta}$ tête/pente

-1

$\theta$ tête/pente

B3

102 — Estimation de la direction de la perpendiculaire à la surface survolée dans le repère de la tête de détection

101 — Mesure du flux optique 1D ou 2D dans plusieurs zones de détection ZV

## FIG.8

103 — Contrôle de la tête de détection pour aligner son axe d'ascension Ze perpendiculairement à la pente locale

$\hat{\theta}$ tête/pente

-1

$\theta$ tête/pente

B3

102 — Détermination de l'orientation de la pente locale de la surface survolée dans le repère de la tête de détection

101 — Mesure de la distance à la surface survolée dans plusieurs direction

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004027434 A1

**Littérature non-brevet citée dans la description**

- **FABIEN EXPERT ; FRANCK RUFFIER.** Controlling docking, altitude and speed in a circular high-roofed tunnel thanks to the optic flow. *IEEE International Conférence on Intelligent Robots and Systems (IROS),* 16 Octobre 2012

- OCTAVE, a bioinspired visuo-motor control system for the guidance of Micro-Air-Vehicles. **FRANCK RUFFIER et al.** PROCEEDINGS OF SPIE. SPIE, 19 Mai 2003, vol. 5119, 1-12
- **T. WHITESIDE et al.** Blur zone. *Nature,* vol. 225, 94-95